# FASCICULE DE BREVET EUROPEEN

(11) **EP 3 828 646 B1**
(45) Date de publication et mention de la délivrance du brevet: **10.04.2024**
(21) Numéro de dépôt: 20210153.1
(22) Date de dépôt: 27.11.2020
(51) Int. Cl.: G04D 3/02, B25B 5/06, B25B 5/08, B23B 31/18

(54) **SYSTÈME DE POSAGE D'UN COMPOSANT HORLOGER**
SYSTEM ZUM STÜTZEN EINER UHRWERKSKOMPONENTE
REST SYSTEM FOR A TIMEPIECE COMPONENT

(30) Priorité: 29.11.2019 EP 19212470
(43) Date de publication de la demande: 02.06.2021
(73) Titulaire: ROLEX SA, 1211 Genève 26 (CH)
(72) Inventeur: HAUSER, Claude, 74930 REIGNIER (FR)
(74) Mandataire: Moinas & Savoye SARL

(56) Documents cités:
- EP-A1- 1 454 691
- US-A- 5 253 880

## Description

L'invention concerne un système de posage d'un composant horloger. L'invention concerne aussi un système de commande pour un tel système de posage. L'invention concerne encore une installation de posage comprenant un tel système de posage et/ou un tel système de commande. L'invention concerne enfin un procédé de fonctionnement d'un système de commande.

Les céramiques, le verre, les pierres naturelles, le saphir, la nacre et les matériaux amorphes (verres métalliques) sont des matériaux fragiles dont la rupture se produit sans déformation plastique préalable lors d'une sollicitation excédant les limites du matériau. Au contraire des métaux qui vont pouvoir se déformer plastiquement, ces matériaux sont fortement susceptibles de se rompre si les contraintes se concentrent dans une région, notamment une région où il existe un défaut de matière - par exemple lié à l'injection. Ceci se traduit par une rupture brutale, voire une explosion de la pièce.

Pour des pièces de révolution réalisées en céramique comme des lunettes de montre, le procédé de fabrication par injection implique un risque de mauvaise concentricité au niveau de l'ébauche et une certaine dispersion des dimensions au sein d'un lot. Un usinage de précision est donc réalisé sur ces ébauches pour obtenir une pièce conforme aux tolérances. Lors de cette étape visant à atteindre les dimensions finales de la pièce, la contrainte appliquée pour le maintien de la pièce sur l'unité d'usinage par une pince contrôlée en position peut se concentrer localement, pouvant induire un dépassement local de la contrainte maximale admissible par la pièce, et entrainer ainsi sa rupture en cours d'usinage.

Pour tourner, fraiser ou meuler des bagues, des brides ou d'autres pièces à parois fines, les mandrins et plateaux de serrage traditionnels ont des limites, par exemple:
- en fonction de la force appliquée par le déplacement des éléments de la pince, les pièces peuvent se déformer voire se briser lors du processus de serrage,
- les contours d'interférence des dispositifs de serrage limitent l'accessibilité des outils et peuvent rendre la préhension impossible,
- les modifications de la géométrie de la pièce en cours d'usinage peuvent entrainer une perte du maintien de cette dernière par le mandrin.

De nombreuses alternatives sont connues pour contourner certains de ces problèmes. Différents dispositifs de serrage très spécifiques ont été développés en fonction de la nature des pièces à usiner, des tolérances, etc.

Par exemple, la pièce à usiner peut être maintenue dans un mandrin solidaire de la broche de la poupée fixe par des mors mobiles, internes et/ou externes, qui assurent également son centrage. Le positionnement des mors est réglé en position, voire en force. De tels mandrins sont spécifiques à une géométrie de pièce et doivent être redéveloppés pour chaque géométrie de pièce particulière.

On connaît des mandrins développés pour maintenir des pièces facilement déformables, par exemple des tubes. Un exemple de mandrin à mâchoires est décrit dans DE202005019887. La transmission du couple entre les mâchoires et la pièce à usiner est essentiellement un ajustement de forme. La force de serrage des mâchoires est commandée par un servomoteur. Le servomoteur comprend un capteur d'angle et optionnellement un capteur de force. Les mâchoires maintiennent la pièce à usiner en étant en contact avec les bords latéraux de ladite pièce (maintien axial). Il n'est pas possible de garantir que la pièce maintenue ne subit aucune déformation plastique si cette dernière présente un défaut de concentricité. Les mâchoires assurent à la fois le maintien et le centrage de la pièce. La force appliquée pour le centrage et la force appliquée pour le maintien sont identiques.

On connaît également des mandrins à placage à serrage mécanique. Les doigts de placage sont montés en rotation et permettent d'assurer le placage de la pièce à usiner sur une surface support du mandrin. Des butées permettent de positionner la pièce à usiner. Les butées sont fixes et ne peuvent pas s'adapter à des variations de géométrie de la pièce. Le centrage des pièces est statique, la force ne peut pas être adaptée en fonction de variation géométrique de la pièce.

On connaît enfin le document EP1454691 qui décrit un système de posage d'un composant horloger.

Le but de l'invention est de fournir un système de posage pour un composant horloger permettant de remédier aux inconvénients mentionnés précédemment et d'améliorer les systèmes de posage connus de l'art antérieur. En particulier, l'invention propose un système de posage permettant d'éviter les ruptures de composants horlogers et permettant d'effectuer des tests d'épreuve de résistance de composants horlogers.

Le système de posage selon l'invention est défini par la revendication 1.

Différents modes de réalisation du système de posage sont définis par les revendications 2 à 9.

Le système de commande selon l'invention est défini par la revendication 10.

Différents modes de réalisation du système de commande sont définis par les revendications 11 à 12.

L'installation de posage selon l'invention est définie par la revendication 13.

Le procédé de fonctionnement d'un système de commande selon l'invention est défini par la revendication 14.

Les dessins annexés représentent, à titre d'exemple, un mode de réalisation d'une installation de posage selon l'invention.

La figure 1 est une vue schématique d'un mode de réalisation d'une installation de posage.

La figure 2 est une vue en coupe, selon un plan A-A représenté sur la figure 6, d'un mode de réalisation d'un système de posage dans une configuration de maintien d'un composant horloger.

La figure 3 est une vue en coupe, selon un plan B-B représenté sur la figure 6, du mode de réalisation du système de posage dans la configuration de maintien d'un composant horloger.

La figure 4 est une vue en coupe, selon le plan A-A, du mode de réalisation du système de posage dans une configuration de libération d'un composant horloger.

La figure 5 est une vue en coupe, selon le plan B-B, du mode de réalisation du système de posage dans une configuration de libération d'un composant horloger.

La figure 6 est une vue partielle en perspective du mode de réalisation du système de posage dans une configuration de libération d'un composant horloger.

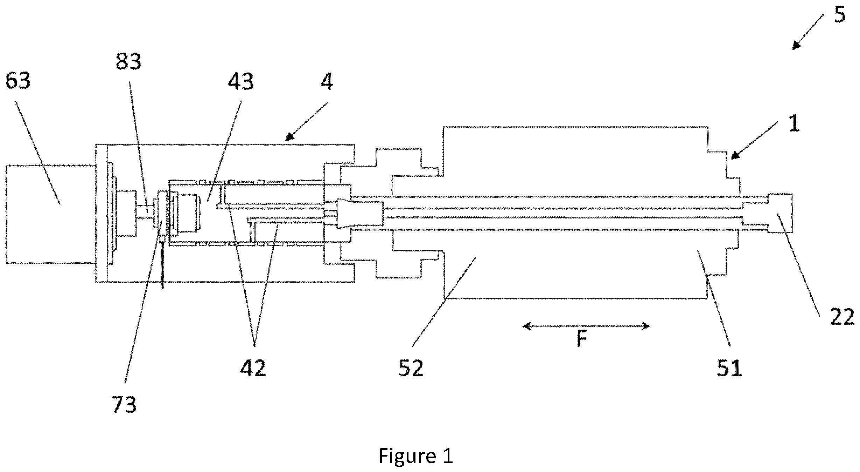

Un mode de réalisation d'une installation de posage 5 est décrite ci-après en référence aux figures 1 à 6.

L'installation de posage 5 est destinée à assurer un posage correct d'un composant horloger 9, notamment d'un composant horloger 9 comprenant une surface 91 de révolution et/ou un axe A9.

Le composant horloger a par exemple une forme annulaire. En particulier, le composant horloger peut présenter un rapport diamètre / épaisseur (mesurée radialement à l'axe A9 et/ou mesurée selon l'axe A9) important, par exemple supérieur à 10 ou supérieur à 15. Le composant horloger peut par exemple être une carrure, une lunette, une bague de lunette, un disque de décoration et/ou d'affichage de lunette, un réhaut, un cadran, un fond, une bague d'emboîtage ou une glace.

Un tel posage est nécessaire pour positionner et maintenir le composant horloger pendant une étape de traitement du composant horloger. Par « traitement », on entend toute opération de modification du composant horloger, notamment par enlèvement de matière, comme le meulage, la rectification, le polissage, l'usinage (outil coupant, laser, électroérosion), et/ou par ajout de matière, notamment revêtement de surface ou décoration.

L'installation de posage 5 comprend de préférence un système de posage 1 (ou une pince de maintien) et/ou un système de commande 4 du système de posage 1 (ou pot de serrage). Le système de posage 1 et le système de commande 4 collaborent pour assurer le maintien du composant horloger 9, en particulier lors de phases de rectification ou modification de cotes externes.

Le système de posage 1 du composant horloger 9 comprend :
- un dispositif de positionnement 2, notamment un dispositif de centrage, du composant horloger 9 relativement à un axe A du système, et
- un dispositif de maintien 3 du composant horloger 9,
les dispositif de positionnement 2 et dispositif de maintien 3 étant indépendants et/ou distincts.

Du fait de l'indépendance et/ou du caractère distinct des dispositif de positionnement 2 et dispositif de maintien 3, le dispositif de positionnement 2 peut être activé alors que le dispositif de maintien 3 n'est pas activé. Autrement dit, le dispositif de positionnement 2 peut être dans une configuration où il agit sur le composant horloger 9, notamment par contact, en particulier par contact sur la surface 91, pour le positionner relativement à l'installation de posage 5 et/ou relativement au système de posage 1, alors que le dispositif de maintien 3 peut être dans une configuration où il n'agit pas sur le composant horloger 9.

Toutefois, l'indépendance et/ou le caractère distinct des dispositif de positionnement 2 et dispositif de maintien 3 est tel que, le dispositif de positionnement 2 peut être activé alors que le dispositif de maintien 3 est également activé.

De même, l'indépendance et/ou le caractère distinct des dispositif de positionnement 2 et dispositif de maintien 3 est tel que, le dispositif de positionnement 2 peut être désactivé alors que le dispositif de maintien 3 est également désactivé.

Bien que cela ne soit pas préféré, le dispositif de positionnement 2 peut être désactivé alors que le dispositif de maintien 3 est activé.

Le dispositif de positionnement 2 a pour fonction de positionner le composant horloger 9 sur l'installation de posage 5 et/ou sur le système de posage 1. Autrement dit, il permet d'assurer que le composant horloger 9 se trouve dans une position prédéfinie par rapport à un référentiel lié à l'installation de posage 5 et/ou lié au système de posage 1. Par exemple, le dispositif de positionnement 2 a pour fonction de centrer le composant horloger 9 sur le système de posage 1, c'est-à-dire de faire coïncider les axes A et A9. Toutefois, des efforts, même d'intensité modérée, voire faible, appliqués sur le composant horloger 9 peuvent le déplacer relativement à ce référentiel malgré l'action du dispositif de positionnement 2. En particulier, aucun obstacle peut ne s'opposer à un déplacement du composant horloger relativement à l'installation de posage 5 et/ou au système de posage 1, selon un sens dans la direction de l'axe A ou A9.

Le dispositif de maintien 3 a pour fonction de maintenir ou fixer le composant horloger 9 sur l'installation de posage 5 et/ou sur le système de posage 1. Autrement dit, il permet d'assurer que le composant horloger 9 reste fixé et immobile dans une position prédéfinie par rapport au référentiel lié à l'installation de posage 5 et/ou lié au système de posage 1. De préférence, un obstacle est prévu pour s'opposer à un déplacement du composant horloger 9 relativement à l'installation de posage 5 et/ou au système de posage 1, selon un sens dans la direction de l'axe A ou A9.

Des efforts d'intensité conséquente appliqués (par exemple pendant une opération d'usinage) sur le composant horloger 9 pourraient le déplacer relativement à ce référentiel malgré l'action du dispositif de positionnement. En particulier, le dispositif de maintien 3 prévoit des obstacles s'opposant à un déplacement du composant horloger 9 relativement à l'installation de posage 5 et/ou au système de posage 1, selon la direction de l'axe A ou A9.

Le système de posage 1 assure donc à la fois le positionnement, notamment le centrage du composant horloger 9, et le maintien du composant horloger 9 dans cette position.

Le système de posage 1 a de préférence une forme globalement cylindrique centrée sur l'axe A. Le système de posage 1 comprend un bâti comprenant un premier capot 51 et un deuxième capot 52. Les premier capot 51 et deuxième capot 52 sont de préférence montés solidaires l'un à l'autre. Les premier et deuxième capots forment un carter.

Le dispositif de positionnement 2 est par exemple commandé pneumatiquement ou hydrauliquement, c'est-à-dire que le système de commande 4 comprend un dispositif de commande pneumatique ou hydraulique agissant sur un élément du dispositif de positionnement 2.

Le dispositif de positionnement 2 comprend des éléments 21 de positionnement, notamment des galets 21, déplaçables selon une première direction 28, notamment une première direction radiale 28 relativement à l'axe A du système de posage 1. Chacun ou certains des éléments 21 de positionnement peu(ven)t être déplacé(s) dans une direction spécifique 28 ou une direction propre 28. Les directions spécifiques ou propres 28 peuvent être différentes pour chacun ou pour certains des éléments de positionnement. Avantageusement, chacune des directions spécifiques 28 est une direction radiale relativement à l'axe A. Avantageusement, les directions spécifiques 28 sont disposées avec un écart angulaire ou un décalage angulaire autour de l'axe A (l'écart angulaire α entre deux directions spécifiques adjacentes étant α=360°/n, avec n le nombre des éléments 21 de positionnement).

Les éléments 21 de positionnement, notamment les galets 21, peuvent être déformables ou non, par exemple en comportant une partie en élastomère. Alternativement ou complémentairement, les éléments 21 de positionnement, notamment les galets 21, peuvent être écartables. Les éléments 21 de positionnement, notamment les galets 21, sont de préférence réalisés en métal. De préférence, les éléments 21 de positionnement, notamment les galets 21, sont disposés ou agencés de manière à appliquer des forces radiales sur le composant horloger 9 à positionner et à maintenir. Les éléments 21 de positionnement, notamment les galets 21, peuvent avoir une forme permettant de répartir les forces sur une surface 91 de contact du composant horloger 9 à traiter. Par exemple, les éléments 21 de positionnement, notamment les galets 21, sont de forme conique ou tronconique ou épousent la forme du composant horloger 9 à traiter.

Dans le cas d'un dispositif de positionnement 2 avec des galets écartables ou avec des galets déformables latéralement, le dispositif de positionnement 2 comprend une tête de centrage 22 incluant une surface 23, notamment une surface tronconique 23 et/ou une surface déplaçable selon l'axe A du système de posage 1, les éléments de positionnement 21 étant déplaçables par contact avec la surface 23.

La tête de centrage 22, et par conséquent la surface tronconique 23, sont déplacées en translation selon l'axe A par l'action d'un vérin comprenant principalement un cylindre 25 et un piston 24. Le piston 24 est solidaire de la tête de centrage 22. Le vérin est alimenté en fluide via des conduites 26, 27 et 29. Le cylindre 25 est quant à lui solidaire du bâti du système de posage 1. Lorsque le vérin est actionné, la tête de centrage 22 est donc déplacée en translation selon l'axe A relativement au bâti.

De manière avantageuse, le système de positionnement comprend éventuellement des éléments de rappel élastique des éléments de positionnement 21 en contact contre cette surface 23.

Préférentiellement, le système de positionnement comprend au moins trois éléments de positionnement 21, notamment trois, quatre, cinq ou six.

Alternativement ou complémentairement, les éléments de positionnement 21 sont équi-répartis autour de l'axe A du système de posage 1.

Les éléments de positionnement 21 peuvent être maintenus en place par l'intermédiaire du capot 51 comportant des ouvertures adaptées pour assurer le maintien des éléments de positionnement 21 entre une butée 231, la tête de centrage 22 et le capot 51. Lorsque la tête de centrage 22 actionne les éléments de positionnement 21, ils sont comprimés contre le composant horloger 9 à traiter en basculant et/ou en coulissant et/ou en se déformant afin d'assurer la fonction de positionnement.

Pour une variante particulière (non illustrée) avec des galets déformables, par exemple en élastomère, la tête de centrage peut comprendre une partie supérieure venant appuyer sur la partie supérieure des galets. La tête de centrage peut être cylindrique.

Pour réaliser le positionnement du composant horloger 9, des forces radiales sont appliquées par les éléments de positionnement 21 sur le composant horloger 9. Ces forces radiales sont de préférence commandées pneumatiquement ou hydrauliquement.

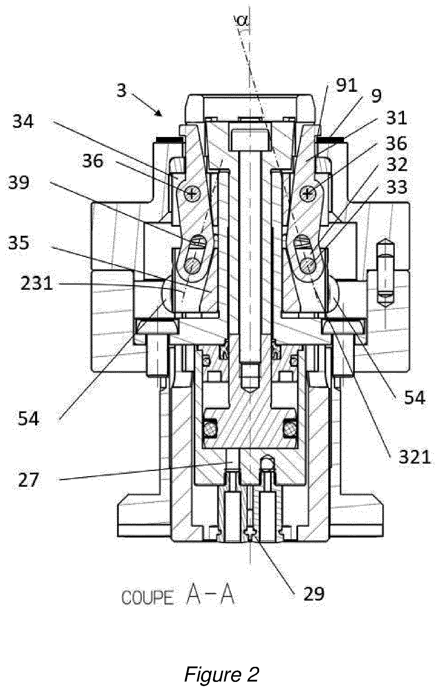

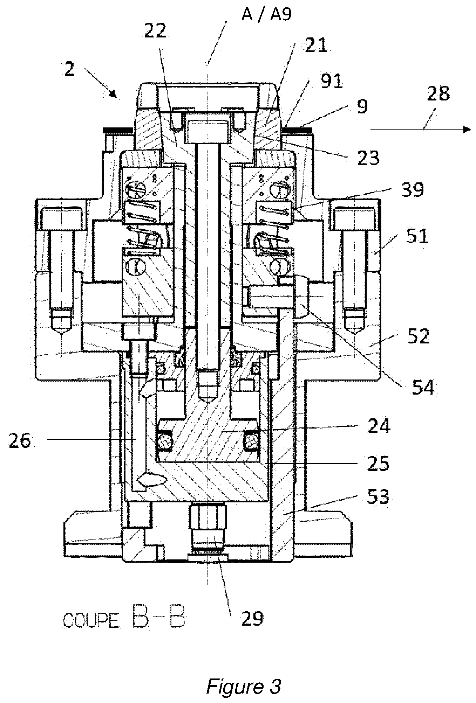

Dans une configuration activée du vérin représentée sur les figures 2 et 3, un fluide est introduit dans le vérin de sorte à déplacer le piston 24 et rentrer la tête de centrage 22 dans le premier capot 51. Ceci a pour conséquence d'activer le dispositif de positionnement 2, c'est-à-dire de déplacer radialement vers l'extérieur relativement à l'axe A et/ou de déformer les éléments de positionnement 21 de sorte qu'ils agissent sur le composant horloger 9. Les éléments de positionnement 21 viennent ainsi au contact de la surface interne 91 du composant horloger 9 à positionner, avec une force contrôlée par le vérin. Cette configuration permet le positionnement du composant. Cette configuration permet notamment le centrage du composant horloger 9.

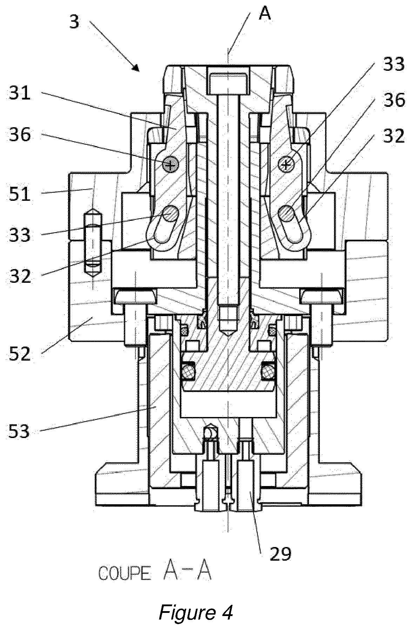

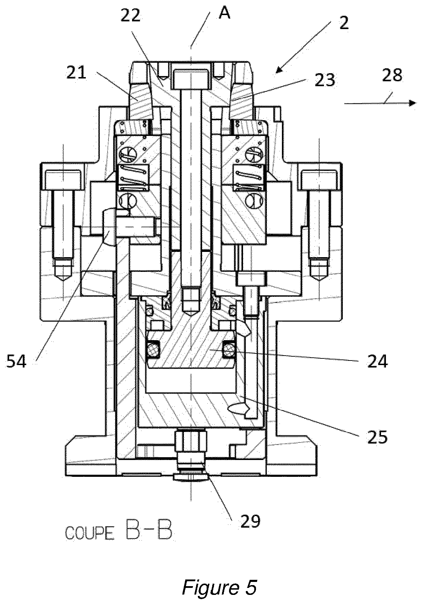

Dans une configuration désactivée du vérin représentée sur les figures 4 et 5, un fluide est introduit dans le vérin de sorte à déplacer le piston 24 et sortir la tête de centrage 22 du premier capot 51. Ceci a pour conséquence de désactiver le dispositif de positionnement 2, c'est-à-dire de libérer les éléments de positionnement 21.

En modifiant la pression de fluide de part et d'autre du piston 24, on déplace la tête de centrage 22 qui agit sur les éléments de positionnement 21 en les écartant ou en les comprimant plus ou moins. Des forces radiales sont ainsi appliquée sur le composant horloger 9 à traiter de manière proportionnelle à la pression dans le vérin.

Le dispositif de maintien 3 est par exemple commandé pneumatiquement ou hydrauliquement, c'est-à-dire que le système de maintien comprend un dispositif de commande pneumatique ou hydraulique agissant sur un élément du dispositif de maintien 3.

Le dispositif de maintien 3 comprend de préférence des éléments 31 de maintien, notamment des bascules 31, déplaçables en rotation autour d'axes 36 s'étendant selon une deuxième direction, notamment une deuxième direction orthoradiale relativement à l'axe A du système de posage 1. Les éléments de maintien 31 sont par exemple montés en liaison pivot autour d'axe 36 sur le premier corps 34.

Le dispositif de maintien 3 comprend par exemple au moins trois éléments de maintien 31, notamment trois, quatre, cinq ou six.

Alternativement ou complémentairement, les éléments de maintien 31 sont équi-répartis autour de l'axe A du système de posage 1.

De préférence, un deuxième corps 35 est monté en liaison glissière selon l'axe A par rapport au premier corps 34 et les éléments de maintien 31 sont pivotés sur le premier corps 34 et sont montés en liaison mécanique avec le deuxième corps 35 via des systèmes à cames 32, 33, notamment des systèmes à cames desmodromiques.

Des ressorts hélicoïdaux 39 sont logés en compression entre le premier corps 34 et le deuxième corps 35. Ainsi, les premier et deuxième corps sont reliés entre eux par des ressorts 39 et par les éléments de maintien 31.

Un tirant 53 est mobile en translation selon l'axe A dans le bâti. Le tirant 53 est fixé au deuxième corps 35, par exemple par une vis 54. Ainsi, le tirant 53 permet de déplacer le deuxième corps 35 relativement au premier corps 34 en le poussant, vers le premier corps 34, contre l'action des ressorts 39. Le tirant permet aussi de déplacer le deuxième corps 35 relativement au premier corps 34 en le tirant pour l'éloigner du premier corps 34 et pour activer les éléments de maintien 31.

Les systèmes à came comprennent par exemple :
- des rainures oblongues 32 sur les éléments de maintien 31, respectivement sur le deuxième corps 35, les rainures s'étendant selon des directions 321 formant un angle α avec l'axe A du système de posage 1,
- des goupilles 33 coopérant avec les rainures et prévues sur le deuxième corps 35, respectivement sur les éléments de maintien 31.

L'angle α a par exemple une valeur comprise entre 10° et 30° dans la configuration des figures 2 et 3.

Ainsi, le système de posage 1 comprend également des moyens de maintien 31 permettant d'assurer le bridage du composant horloger 9 à traiter, par exemple sous la forme de doigts de bridage situés à l'extrémité de bascules ou de doigts de bridage mobile en rotation.

En conclusion, le système de posage 1 positionne et maintient le composant horloger 9 à traiter, de manière centrée, et assure son maintien axial et radial tout au long du processus de traitement avec une force adaptée pour éviter de sur-contraindre le composant horloger 9 à traiter. L'introduction et le retrait du composant horloger 9 sont facilités, tout comme les différents réglages du système de posage 1. La robustesse des systèmes de posage connus est améliorée.

Le composant horloger 9 peut être positionné ou centré par des galets 21 et maintenu sur le système de posage 1 par l'intermédiaire de doigts ou brides 31. Les forces appliquées sont sélectionnées afin de garantir que le composant horloger 9 ne soit pas déformé par le dispositif de centrage 2 tout en garantissant que le dispositif maintienne parfaitement le composant horloger 9 durant une opération de traitement, notamment un usinage.

Le système de posage 1 est par exemple assemblé au système de commande par un système à baïonnette.

Dans une configuration activée du dispositif de maintien 3 sur les figures 2 et 3, le tirant 53 libère le deuxième corps 35 de sorte à écarter le deuxième corps 35 du premier corps 34 sous l'effet des ressorts 39. L'action des goupilles 33 dans les rainures 32 provoque la rotation des éléments de maintien 31 autour des axes 36 et le plaquage des éléments de maintien 31 sur le composant horloger 9. Le dispositif de maintien 3 est ainsi activé. Dans cette position, le composant horloger 9 à traiter est maintenu sur le système de posage 1. Les éléments de maintien 31 appliquent des efforts radiaux sur la surface 91 du composant horloger 9 et/ou axiaux (relativement à l'axe A) sur la surface supérieure du composant horloger 9, opposée à la surface du composant horloger 9 en contact contre le capot 51.

La force appliquée sur le tirant 53 est adaptée en fonction de la force des ressorts, de la référence du composant horloger 9 à traiter et de valeurs tabulées ou à partir de mesures dimensionnelles effectuées directement sur une machine comprenant le système de posage 1 et permettant le traitement. La force est avantageusement réglée en compression et en traction. Elle permet des mouvements linéaires du tirant plus doux, c'est-à-dire avec moins d'à-coups.

Dans une configuration désactivée du dispositif de maintien 3 sur les figures 4 et 5, le tirant est activé pour compresser les ressorts 39 entre le premier corps 34 et le deuxième corps 35. L'action des goupilles 33 dans les rainures 32 provoque la rotation des éléments de maintien 31 autour des axes 36 de sorte à libérer le composant horloger 9. Le dispositif de maintien 3 est ainsi désactivé. Dans cette configuration, le composant horloger 9 peut être placé sur le système de posage 1 ou retiré du système de posage 1.

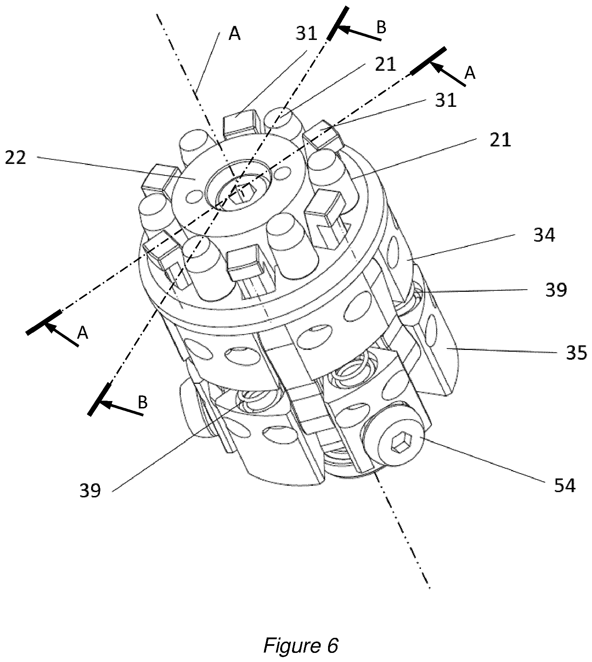

Dans l'exemple illustré sur la figure 6, six éléments de positionnement 21 et six éléments de maintien 31 sont agencés pour assurer une bonne répartition des efforts de positionnement et de maintien.

Avantageusement, le nombre d'éléments de maintien 21 est identique au nombre d'éléments de positionnement 31.

Avantageusement, les éléments de positionnement 21 sont intercalés entre les éléments de maintien 31.

Le système de commande 4 permet de commander le système de posage 1. Le système de commande 4 comprend :
- un premier dispositif 42 de commande du dispositif de positionnement 2 du composant horloger 9, et
- un deuxième dispositif 43 de commande du dispositif de maintien 3 du composant horloger 9.

Les premier et deuxième dispositifs de commande étant indépendants et/ou distincts.

Du fait de l'indépendance et/ou du caractère distinct des dispositifs de commande, le dispositif de positionnement 2 et le dispositif de maintien 3 peuvent être activés de manière indépendante comme expliqué plus haut.

Le premier dispositif de commande 42 comprend une alimentation en fluide sous pression raccordée aux conduits 26, 27 et 29. L'alimentation comprend des éléments de pilotage de la pression du fluide et des moyens de commutation de l'alimentation en fluide pour permettre d'activer le vérin dans ses deux sens de fonctionnement.

Le deuxième dispositif de commande 43 comprend un actionneur électromécanique incluant un moteur 63 et une transmission 83, notamment une unité de vis à bille 83. La transmission 83 permet de lier le moteur 63 au tirant 53. Ainsi, le moteur 63 permet d'actionner le tirant 53 via la transmission 83.

L'unité de vis à billes 83 avantageusement positionnée entre le moteur 63 et le capteur 73 permet d'optimiser la conversion d'un mouvement de rotation du moteur 63 en un mouvement de translation du tirant 53. Les accélérations et décélérations du moteur 63 sont ainsi transmises d'une manière mieux maîtrisée, les forces de maintien étant transmises avec moins d'à-coups. Ceci assure à la fois la réversibilité des commandes et une meilleure maîtrise des forces transmises par le système de commande. La conception du système de commande permet une grande maîtrise des mouvements linéaires du tirant 53. On peut contrôler sa position, sa course, sa vitesse et ses accélérations et décélérations.

Le premier dispositif de commande 42 comprend un premier élément de régulation des efforts exercés par le dispositif de positionnement 2. Le premier élément de régulation des efforts exercés par le dispositif de positionnement 2 peut comprendre un premier capteur d'effort, notamment un capteur de pression de fluide, de sorte à asservir les efforts exercés par le dispositif de positionnement 2.

Le deuxième dispositif de commande 43 comprend un deuxième élément de régulation des efforts exercés par le dispositif de maintien 3.

Avantageusement, le deuxième élément de régulation des efforts exercés par le dispositif de maintien 3 comprend un deuxième capteur d'effort 73 entre le moteur 63 et le tirant 53. Ce deuxième capteur d'effort 73 peut permettre d'asservir les efforts exercés par le dispositif de maintien 3.

Le deuxième capteur d'effort 73 (par exemple dans la gamme 0 à 500N) est placé entre le moteur 63 et le tirant 53 pour mesurer une force F appliquée sur le tirant 53, de manière à maintenir la contrainte appliquée sur le composant horloger 9 dans les limites tolérables. Une géométrie particulière du système de posage 1 permet de répartir la force sur les différents points d'appui en fonction de la géométrie du composant horloger, de manière à éviter de dépasser la contrainte maximale admissible localement par ce dernier. La force F peut être contrôlée tant en compression qu'en traction.

Le capteur de force 73 permet de mesurer des forces de l'ordre de 0 à 500 N et fonctionne en compression et en traction. Le capteur de force 73 peut être un capteur piézoélectrique. Dans une variante, le capteur 73 est remplacé par un limiteur de force, par exemple un ressort permettant de limiter la force du tirant 53 à une valeur prédéterminée, par exemple à 250 N.

Le mouvement de translation du tirant 53 permet de régler avec précision la force de maintien des éléments de maintien du composant horloger 9.

La force de maintien est donc contrôlée en fonction de la force appliquée sur le tirant 53. Alternativement, une mesure de la position du tirant 53 peut également être associée à la mesure en force pour fiabiliser le contrôle de la force de maintien.

Le système de commande peut avoir une forme sensiblement cylindrique. Il permet par exemple de piloter les mouvements en rotation et en translation d'un système de posage 1 dans un tour d'usinage.

Le système de commande comprend avantageusement en outre un joint tournant permettant l'alimentation en fluide du vérin actionnant la fonction de positionnement sur le système de posage 1.

Un mode d'exécution d'un procédé de fonctionnement du système de commande 4 pour la commande du système de posage 1 est décrit ci-après.

Le procédé comprend :
- une étape d'application d'une première consigne d'efforts exercés par le dispositif de positionnement 2, la première consigne évoluant par exemple en fonction de l'évolution des dimensions du composant usiné ou de valeurs tabulées ou linéairement avec le temps, et/ou
- une étape d'application d'une deuxième consigne d'efforts exercés par le dispositif de maintien 3, la deuxième consigne évoluant par exemple en fonction de l'évolution des dimensions du composant usiné ou de valeurs tabulées ou linéairement avec le temps, et/ou
- une étape d'application d'une troisième consigne d'efforts exercés par le dispositif de maintien 3, la troisième consigne permettant de réaliser un essai de résistance du composant horloger 9. En effet, l'installation de posage 5 peut également être utilisée pour effectuer un test d'épreuve. Le dispositif de positionnement 2 peut permettre un test par application de forces radiales. Le dispositif de maintien 3 peut permettre un test par application de forces de compression. Si le composant horloger y résiste, il est conforme. Sinon, le composant horloger 9 est détruit étant donné le caractère fragile du matériau préféré du composant horloger 9.

Les forces de positionnement et/ou de maintien appliquées peuvent être adaptées durant l'usinage pour tenir compte des variations de géométrie du composant horloger 9 durant le processus d'usinage et rester en deçà de la limite du matériau du composant horloger 9. Ainsi, les efforts peuvent évoluer par exemple en fonction de l'évolution des dimensions du composant usiné ou de valeurs tabulées.

De préférence, lors d'un placement d'un composant horloger sur l'installation de posage, l'intensité de l'effort du dispositif de positionnement appliqué sur le composant horloger croît linéairement avec le temps jusqu'à atteindre une première cible de consigne d'effort. De préférence, lors du placement du composant horloger sur l'installation de posage, l'intensité de l'effort du dispositif de maintien appliqué sur le composant horloger croît linéairement avec le temps jusqu'à atteindre une deuxième cible de consigne d'effort. Ainsi, les efforts peuvent évoluer par exemple linéairement avec le temps.

Autrement dit, les solutions selon l'invention peuvent consister en un système de préhension pour l'usinage d'un composant horloger 9 à géométrie de révolution, comprenant une pince munie d'un dispositif de centrage du composant horloger contrôlé en force par un vérin pneumatique associé à un dispositif de maintien 3 du composant horloger 9 contrôlé en force par un pot de serrage. Le centrage et le maintien des composants horlogers peuvent être effectués depuis l'intérieur d'un composant horloger. Alternativement, le composant horloger peut être centré et maintenu depuis l'extérieur. Dans une variante, le centrage peut être effectué de l'intérieur et le maintien peut être effectué de l'extérieur ou *vice versa.*

Dans les solutions évoquées précédemment, on propose donc un moyen de préhension des composants horlogers contrôlé en force et non pas en position, permettant la préhension de composants horlogers dont la circularité et/ou la concentricité initiale n'est pas parfaite, en évitant leur rupture en cours d'usinage.

Avantageusement, le contrôle en force de la pince de préhension permet également de réaliser *in situ* un test d'épreuve, en brisant avant même le début de l'usinage les composants horlogers qui contiendraient une trop grande quantité de défauts à l'issue des étapes précédentes de fabrication.

Grâce aux solutions décrites plus haut, on maitrise mieux la force de maintien, quelle que soit la dimension du composant horloger à traiter et ainsi on peut réduire le taux de déchet (casse et/ou défaut de circularité). Les moyens de centrage de la pince permettent quant à eux de diminuer le nombre de composants horlogers présentant des défauts de concentricité et/ou de circularité après l'étape de traitement.

Le maintien est effectué par un contrôle en force des éléments de la pince, et non pas par un contrôle en positionnement. Ceci permet d'améliorer la préhension de disques de lunettes lors d'étapes de rectification. Les solutions décrites sont particulièrement adaptées pour le maintien de pièces fragiles à géométrie de révolution, comme des composants horlogers en céramique, lors d'étapes de rectification.

Par le contrôle spécifique en force des éléments de pilotage de la pince (pot de serrage et vérin), les forces de maintien et de positionnement peuvent être adaptées en fonction de l'évolution des dimensions du composant horloger, soit par calcul des contraintes en fonction des épaisseurs, soit par l'utilisation de valeurs tabulées avec des données pré-calculées, soit par mesures *in situ* du composant horloger, afin de ne jamais sur-contraindre le composant horloger. La géométrie du composant horloger étant amenée à être modifiée lors des opérations d'usinage, les forces exercées peuvent varier de sorte à maintenir des contraintes constantes lors de l'avancement de l'usinage.

## Revendications

1. Système (1) de posage d'un composant horloger (9), notamment d'un composant horloger comprenant une surface (91) de révolution et/ou un axe (A9), le système de posage (1) comprenant :
- un dispositif de positionnement (2), notamment un dispositif de centrage, du composant horloger (9) relativement à un axe (A) du système, et
- un dispositif de maintien (3) du composant horloger (9), les dispositifs de positionnement et de maintien étant indépendants et/ou distincts,
**caractérisé en ce que** le dispositif de positionnement (2) comprend des éléments (21) de positionnement, notamment des galets (21), déplaçables selon une première direction (28), notamment une première direction radiale (28) relativement à l'axe (A) du système de posage (1), et/ou le dispositif de positionnement (2) comprend des éléments (21) de positionnement, notamment des galets (21), déplaçables chacun selon une direction différente ou une direction propre.

2. Système selon la revendication 1, **caractérisé en ce que** le dispositif de positionnement (2) est commandé pneumatiquement ou hydrauliquement.

3. Système selon l'une des revendications précédentes, **caractérisé en ce que** le dispositif de positionnement (2) comprend une surface (23), notamment une surface tronconique (23) et/ou une surface déplaçable selon l'axe (A) du système de posage (1), les éléments de positionnement (21) étant déplaçables par contact avec la surface (23), le système de positionnement comprenant éventuellement des éléments de rappel élastique des éléments de positionnement (21) en contact contre cette surface (23).

4. Système selon l'une des revendications précédentes, **caractérisé en ce que** le système comprend au moins trois éléments de positionnement (21) et/ou **en ce que** les éléments de positionnement (21) sont équi-répartis autour de l'axe (A) du système de posage (1).

5. Système selon l'une des revendications précédentes, **caractérisé en ce que** le dispositif de maintien (3) est commandé pneumatiquement ou hydrauliquement.

6. Système selon l'une des revendications précédentes, **caractérisé en ce que** le dispositif de maintien (3) comprend des éléments (31) de maintien, notamment des bascules (31), déplaçables en rotation autour d'axes (36) s'étendant selon une deuxième direction, notamment une deuxième direction orthoradiale relativement à l'axe (A) du système de posage (1).

7. Système selon la revendication 6, **caractérisé en ce que** le dispositif de maintien (3) comprend au moins trois éléments de maintien et/ou **en ce que** les éléments de maintien sont équi-répartis autour de l'axe (A) du système de posage (1).

8. Système selon la revendication 6 ou 7, **caractérisé en ce que** le système de posage (1) comprend un premier corps (34) et un deuxième corps (35) montés en liaison glissière l'un par rapport à l'autre selon l'axe (A) du système de posage (1) et **en ce que** les éléments (31) de maintien sont pivotés sur le premier corps et sont montés en liaison mécanique avec le deuxième corps via des systèmes à cames (32, 33), notamment des systèmes à cames desmodromiques.

9. Système selon la revendication précédente, **caractérisé en ce que** les systèmes à came comprennent :
- des rainures oblongues (32) sur les éléments de maintien, respectivement sur le deuxième corps, les rainures s'étendant selon des directions (321) formant un angle (α) avec l'axe (A) du système de posage (1),
- des goupilles (33) coopérant avec les rainures et prévues sur le deuxième corps, respectivement sur les éléments de maintien.

10. Système de commande (4) pour la commande d'un système de posage (1) selon l'une des revendications précédentes, **caractérisé en ce qu'**il comprend :
- un premier dispositif de commande (42) d'un dispositif de positionnement (2) d'un composant horloger (9), et
- un deuxième dispositif de commande (43) d'un dispositif de maintien (3) d'un composant horloger (9),
les premier et deuxième dispositifs de commande étant indépendants et/ou distincts.

11. Système selon la revendication précédente, **caractérisé en ce que**
- le premier dispositif de commande (42) comprend un premier élément de régulation des efforts exercés par le dispositif de positionnement (2),
et/ou **en ce que**
- le deuxième dispositif de commande (43) comprend un deuxième élément de régulation des efforts exercés par le dispositif de maintien (3).

12. Système selon la revendication 11, **caractérisé en ce que** :
- le premier élément de régulation des efforts exercés par le dispositif de positionnement (2) comprend un premier capteur d'effort, notamment un premier capteur de pression, de sorte à asservir les efforts exercés par le dispositif de positionnement (2)
et/ou
- le deuxième élément de régulation des efforts exercés par le dispositif de maintien (3) comprend un deuxième capteur d'effort (73) de sorte à asservir les efforts exercés par le dispositif de maintien (3), notamment, le deuxième dispositif de commande (43) comprenant un moteur (63) et une transmission (83) pour actionner un tirant (53), le deuxième élément de régulation des efforts exercés par le dispositif de maintien (3) comprenant un deuxième capteur d'effort (73) entre le moteur et le tirant (53).

13. Installation de posage (5) comprenant un système de posage (1) selon l'une des revendications 1 à 10 et/ou un système de commande (4) selon la revendication 10 à 12.

14. Procédé de fonctionnement d'un système de commande (4), notamment selon l'une des revendications 10 à 12, pour la commande d'un système de posage (1) selon l'une des revendications 1 à 9, **caractérisé en ce qu'**il comprend :
- une étape d'application d'une première consigne d'efforts exercés par le dispositif de positionnement (2), la première consigne évoluant en fonction de l'évolution des dimensions du composant horloger 9 ou de valeurs tabulées ou linéairement avec le temps, et/ou
- une étape d'application d'une deuxième consigne d'efforts exercés par le dispositif de maintien (3), la deuxième consigne évoluant en fonction de l'évolution des dimensions du composant horloger 9 ou de valeurs tabulées ou linéairement avec le temps, et/ou
- une étape d'application d'une troisième consigne d'efforts exercés par le dispositif de maintien (3), la troisième consigne permettant de réaliser un essai de résistance du composant horloger (9).

## Patentansprüche

1. System (1) zum Stützen einer Uhrwerkskomponente (9), insbesondere einer Uhrwerkskomponente mit einer Drehfläche (91) und/oder einer Achse (A9), wobei das Stützsystem (1) Folgendes umfasst:
- eine Vorrichtung zur Positionierung (2), insbesondere eine Vorrichtung zur Zentrierung, der Uhrwerkskomponente (9) bezogen auf eine Achse (A) des Systems, und
- eine Vorrichtung zum Halten (3) der Uhrwerkskomponente (9),
wobei die Positionierungs- und die Haltevorrichtung unabhängig und/oder gesondert sind,
**dadurch gekennzeichnet, dass** die Positionierungsvorrichtung (2) Positionierungselemente (21) umfasst, insbesondere Rollen (21), die in einer ersten Richtung (28) bewegbar sind, insbesondere einer ersten radialen Richtung (28) bezogen auf die Achse (A) des Stützsystems (1), und/oder die Positionierungsvorrichtung (2) Positionierungselemente (21) umfasst, insbesondere Rollen (21), die jeweils in einer unterschiedlichen Richtung oder einer eigenen Richtung bewegbar sind.

2. System nach Anspruch 1, **dadurch gekennzeichnet, dass** die Positionierungsvorrichtung (2) pneumatisch oder hydraulisch gesteuert wird.

3. System nach einem der vorhergehenden Ansprüche, **dadurch gekennzeichnet, dass** die Positionierungsvorrichtung (2) eine Fläche (23), insbesondere eine kegelstumpfförmige Fläche (23) und/oder eine Fläche, die entlang der Achse (A) des Stützsystems (1) bewegbar ist, umfasst, wobei die Positionierungselemente (21) durch Kontakt mit der Fläche (23) bewegbar sind, wobei das Positionierungssystem eventuell elastische Rückholelemente der Positionierungselemente (21) in Anlage an diese Fläche (23) umfasst.

4. System nach einem der vorhergehenden Ansprüche, **dadurch gekennzeichnet, dass** das System wenigstens drei Positionierungselemente (21) umfasst, und/oder dadurch, dass die Positionierungselemente (21) gleichmäßig um die Achse (A) des Stützsystems (1) verteilt sind.

5. System nach einem der vorhergehenden Ansprüche, **dadurch gekennzeichnet, dass** die Haltevorrichtung (3) pneumatisch oder hydraulisch gesteuert wird.

6. System nach einem der vorhergehenden Ansprüche, **dadurch gekennzeichnet, dass** die Haltevorrichtung (3) Halteelemente (31) umfasst, insbesondere Kippanker (31), die um Achsen (36) drehbeweglich sind, die sich in einer zweiten Richtung, insbesondere einer zweiten Richtung, die orthoradial zur Achse (A) des Stützsystems (1) verläuft, erstrecken.

7. System nach Anspruch 6, **dadurch gekennzeichnet, dass** die Haltevorrichtung (3) wenigstens drei Halteelemente umfasst, und/oder dadurch, dass die Halteelemente gleichmäßig um die Achse (A) des Stützsystems (1) verteilt sind.

8. System nach Anspruch 6 oder 7, **dadurch gekennzeichnet, dass** das Stützsystem (1) einen ersten Körper (34) und einen zweiten Körper (35) umfasst, die in Gleitverbindung zueinander entlang der Achse (A) des Stützsystems (1) montiert sind, und dadurch, dass die Halteelemente (31) am ersten Körper geschwenkt werden und in mechanischer Verbindung mit dem zweiten Körper über Nockensysteme (32, 33), insbesondere desmodromische Nockensysteme, montiert sind.

9. System nach dem vorhergehenden Anspruch, **dadurch gekennzeichnet, dass** die Nockensysteme insbesondere Folgendes umfassen:
- längliche Rillen (32) auf den Halteelementen, beziehungsweise auf dem zweiten Körper, wobei sich die Rillen gemäß Richtungen (321) erstrecken, die einen Winkel (α) mit der Achse (A) des Stützsystems (1) bilden,
- Stifte (33), die mit den Rillen zusammenwirken und auf dem zweiten Körper beziehungsweise auf den Halteelementen vorgesehen sind.

10. Steuersystem (4) zur Steuerung eines Stützsystems (1) nach einem der vorhergehenden Ansprüche, **dadurch gekennzeichnet, dass** es Folgendes umfasst:
- eine erste Steuervorrichtung (42) für eine Vorrichtung zur Positionierung (2) einer Uhrwerkskomponente (9), und
- eine zweite Steuervorrichtung (43) für eine Vorrichtung zum Halten (3) einer Uhrwerkskomponente (9), wobei die erste und zweite Steuervorrichtung unabhängig und/oder gesondert sind.

11. System nach dem vorhergehenden Anspruch, **dadurch gekennzeichnet, dass**
- die erste Steuervorrichtung (42) ein erstes Element zur Regulierung der Kräfte umfasst, die von der Positionierungsvorrichtung (2) ausgeübt werden,
und/oder dadurch, dass
- die zweite Steuervorrichtung (43) ein zweites Element zur Regulierung der Kräfte umfasst, die von der Haltevorrichtung (3) ausgeübt werden.

12. System nach Anspruch 11, **dadurch gekennzeichnet, dass**:
- das erste Element zur Regulierung der Kräfte, die von der Positionierungsvorrichtung (2) ausgeübt werden, einen ersten Kraftsensor umfasst,
insbesondere einen ersten Drucksensor, um die Kräfte zu regeln, die von der Positionierungsvorrichtung (2) ausgeübt werden, und/oder
- das zweite Element zur Regulierung der Kräfte, die von der Haltevorrichtung (3) ausgeübt werden, einen zweiten Kraftsensor (73) umfasst, um die Kräfte zu regeln, die von der Haltevorrichtung (3) ausgeübt werden, wobei insbesondere die zweite Steuervorrichtung (43) einen Motor (63) und ein Getriebe (83) zur Betätigung eines Zugelements (53) umfasst, wobei das zweite Element zur Regulierung der Kräfte, die von der Haltevorrichtung (3) ausgeübt werden, einen zweiten Kraftsensor (73) zwischen dem Motor und dem Zugelement (53) umfasst.

13. Stützeinrichtung (5), die ein Stützsystem (1) nach einem der Ansprüche 1 bis 10 und/oder ein Steuersystem (4) nach Anspruch 10 bis 12 umfasst.

14. Betriebsverfahren eines Steuersystems (4), insbesondere nach einem der Ansprüche 10 bis 12, zur Steuerung eines Stützsystems (1) nach einem der Ansprüche 1 bis 9, **dadurch gekennzeichnet, dass** es Folgendes umfasst:
- einen Schritt des Anwendens einer ersten Vorgabe für Kräfte, die von der Positionierungsvorrichtung (2) ausgeübt werden, wobei sich die erste Vorgabe in Abhängigkeit von der Veränderung der Abmessungen der Uhrwerkskomponente 9 oder von tabellarischen Werten oder linear mit der Zeit verändert, und/oder
- einen Schritt des Anwendens einer zweiten Vorgabe für Kräfte, die von der Haltevorrichtung (3) ausgeübt werden, wobei sich die zweite Vorgabe in Abhängigkeit von der Veränderung der Abmessungen der Uhrwerkskomponente 9 oder von tabellarischen Werten oder linear mit der Zeit verändert, und/oder
- einen Schritt des Anwendens einer dritten Vorgabe für Kräfte, die von der Haltevorrichtung (3) ausgeübt werden, wobei es die dritte Vorgabe gestattet, einen Festigkeitsversuch der Uhrwerkskomponente (9) durchzuführen.

## Claims

1. A support system (1) for a horological component (9), in particular for a horological component comprising a surface (91) generated by revolution and/or an axis (A9), the support system (1) comprising:
- a positioning device (2), in particular a centering device, for the horological component (9) in relation to an axis (A) of the system, and
- a holding device (3) for the horological component (9),
the positioning device and holding device being independent and/or distinct,
wherein the positioning device (2) comprises positioning elements (21), in particular rollers (21), which can be displaced in a first direction (28), in particular a first radial direction (28) in relation to the axis (A) of the support system (1) and/or the positioning device (2) comprises positioning elements (21), in particular rollers (21), which can be each displaced in a different direction or in its own direction.

2. The system as claimed in claim 1, wherein the positioning device (2) is controlled pneumatically or hydraulically.

3. The system as claimed in one of the preceding claims, wherein the positioning device (2) comprises a surface (23), in particular a frustoconical surface (23) and/or a surface which can be displaced in accordance with the axis (A) of the support system (1), the positioning elements (21) being able to be displaced by contact with the surface (23), the support system optionally comprising resilient return elements for the positioning elements (21) in contact against this surface (23).

4. The system as claimed in one of the preceding claims, wherein the system comprises at least three positioning elements (21) and/or wherein the positioning elements (21) are uniformly distributed about the axis (A) of the support system (1).

5. The system as claimed in one of the preceding claims, wherein the holding device (3) is controlled pneumatically or hydraulically.

6. The system as claimed in one of the preceding claims, wherein the holding device (3) comprises holding elements (31), in particular rockers (31), which can be displaced in rotation about axes (36) which extend in a second direction, in particular a second orthoradial direction in relation to the axis A of the support system (1).

7. The system as claimed in claim 6, wherein the holding device (3) comprises at least three holding elements and/or wherein the holding elements are uniformly distributed about the axis (A) of the support system (1).

8. The system as claimed in claim 6 or 7, wherein the support system (1) comprises a first member (34) and a second member (35) which are mounted with a sliding connection relative to each other along the axis (A) of the support system (1), and wherein the holding elements (31) are pivoted on the first member and are mounted with a mechanical connection to the second member via cam type systems (32, 33), in particular desmodromic cam type systems.

9. The system as claimed in the preceding claim, wherein the cam type systems comprise:
- oblong grooves (32) in the holding elements and in the second member, respectively, the grooves extending in directions (321) which form an angle (α) with the axis (A) of the support system (1),
- pins (33) which cooperate with the grooves and which are provided on the second member and on the holding elements, respectively.

10. A control system (4) for controlling a support system (1) as claimed in one of the preceding claims, wherein it comprises:
- a first control device (42) for a positioning device (2) for a horological component (9) and
- a second control device (43) for a holding device (3) for a horological component (9),
the first and second control devices being independent and/or different and/or distinct.

11. The system as claimed in the preceding claim, wherein
- the first control device (42) comprises a first control element for the forces applied by the positioning device (2),
and/or wherein
- the second control device (43) comprises a second control element for the forces applied by the holding device (3).

12. The system as claimed in claim 11, wherein
- the first control element for the forces applied by the positioning device (2) comprises a first force sensor, in particular a first pressure sensor, so as to control the forces applied by the positioning device (2),
and/or
- the second control element for the forces applied by the holding device (3) comprises a second force sensor (73) so as to control the forces applied by the holding device (3), in particular the second control device (43) comprising a motor (63) and a transmission (83) for actuating a tie rod (53), the second control element for the forces applied by the holding device (3) comprising a second force sensor (73) between the motor and the tie rod (53).

13. A support installation (5) comprising a support system (1) as claimed in one of claims 1 to 9 and/or a control system (4) as claimed in claim 10 to claim 12.

14. An operating method for a control system (4), in particular as claimed in one of claims 10 to 12, for controlling a support system (1) as claimed in one of claims 1 to 9, wherein it comprises:
- a step of applying a first specification of forces applied by the positioning device (2), the first specification changing in accordance with the change in the dimensions of the horological component 9 or tabulated values or linearly over time, and/or
- a step of applying a second specification of forces applied by the holding device (3), the second specification changing in accordance with the change in the dimensions of the horological component 9 or tabulated values or linearly over time, and/or
- a step of applying a third specification of forces applied by the holding device (3), the third specification allowing a resistance test of the horological component (9) to be carried out.
